# EUROPEAN PATENT SPECIFICATION

(11) **EP 3 465 046 B1**
(45) Date of publication and mention of the grant of the patent: **18.03.2020**
(21) Application number: 17729001.2
(22) Date of filing: 24.05.2017
(51) Int. Cl.: H01M 8/0612, F28D 7/10, F28D 21/00, F28F 1/04, F28F 1/16, F28F 1/42, F28F 21/08, C01B 3/32, C01B 3/38, H01M 8/1018, F28F 1/26, F28F 9/22

(54) **A FUEL CELL SYSTEM WITH AN EXTRUDED REFORMER CHAMBER AND A METHOD OF OPERATING THE FUEL CELL SYSTEM**
BRENNSTOFFZELLENSYSTEM MIT EXTRUDIERTEM REFORMER UND VERFAHREN ZUM BETREIBEN DES BRENNSTOFFZELLENSYSTEMS
SYSTEME DE PILE A COMBUSTIBLE AVEC REFORMATEUR EXTRUDEE ET PROCEDE D'EXPLOITATION

(30) Priority: 31.05.2016 DK 201670383
(43) Date of publication of application: 10.04.2019
(73) Proprietor: fischer Eco Solutions GmbH, 77855 Achern-Fautenbach (DE)
(72) Inventor: KAAGAARD, Thorbjørn Ravn, 9530 Støvring (DK); BLICHER-KOCH, Theis, 8250 Egå (DK)
(74) Representative: Medenwaldt, Robin
(86) International application number: PCT/DK2017/050173
(87) International publication number: WO 2017/207004

(56) References cited:
- WO-A2-2015/018963
- GB-A- 2 250 130
- JP-A- H07 223 801
- US-A- 4 504 447
- US-A1- 2008 254 327

## Description

### FIELD OF THE INVENTION

The present invention relates to a fuel cell system with an extruded reformer chamber and a method of operation the fuel cell system. In particular, it relates to an extruded reformer chamber.

### BACKGROUND OF THE INVENTION

International patent application WO2006/069057 discloses a catalytic reformer as part of a fuel processor that produces hydrogen from fuel. The reformer comprises an extruded monolithic structure in which there are integrated longitudinal channels, some of which are used as a boiler for evaporating fuel, some are used as reformer chambers for reforming fuel, and others are used as burner chambers for providing heat for the evaporation of fuel in the boiler channels and for the catalytic reforming process in the reformer channels.

The integration of the burner into the monolithic structure implies that the monolithic structure has a relatively large size, unless the reformer channels are made small. Small reformer channels, on the other hand, have a low efficiency. This is also reflected by the fact that the reformer in WO2006/069057 is not working as a single straight-channel structure, but the gas flows through the reformer in a multi-pass arrangement back and forth several times through the monolithic structure.

Furthermore, the integration of the burner in the monolithic structure implies a low degree of flexibility with respect to the design and optimization of the reformer, as a substantial space is taken up by the burner.

It would be desirable to avoid these disadvantages.

Further, GB 2 250 130 discloses an electric power generation system comprising a fuel cell, a fuel storage, a fuel processor with a reformer having a reformer housing wall formed by extrusion. A combustion housing has fins which are formed by extrusion and disposed concentrically around the housing wall. Furthermore a plurality of fins extends radially inwards and outwards from the housing wall.

In a still further prior art disclosure in US 2008/254327 a reformer comprising a stack of first reforming units and second reforming units is disclosed, where a serpentine path pattern is created for the mixed fuel to be distributed uniformly to catalyst pellets provided by a first central hole on a first guiding plate and a plurality of second holes formed in a circle along a peripheral portion of a second guide plate. By alternating the arrangement of first and second guide plates the serpentine path is achieved.

### DESCRIPTION / SUMMARY OF THE INVENTION

It is therefore the object of the invention to provide an improvement in the art. Especially, it is an objective to provide a more flexible system for the burner, evaporator, and reformer. It is a further objective to optimize the fuel cell system with respect to efficiency, despite a high degree of compactness. These objectives are achieved with a fuel cell system and method as described in the appended claims.

The scope of protection is defined by the appended claims. Features describing details of further embodiments are defined in the dependent claims.

The fuel cell system comprises a fuel tank for providing fuel to the fuel cell system. A reformer-fuel evaporator is used for evaporating the liquid fuel, for example, a mixture of methanol and water, from the fuel tank and providing the evaporated fuel to a reformer system in which the evaporated fuel is converted into syngas. Syngas mainly consist of hydrogen and carbon dioxide and a small content of water and carbon monoxide. The syngas is supplied from the reformer system to the fuel cell anode side of the proton electrolyte membrane, while oxygen, typically from air, is supplied from an air supply to the cathode side of the proton electrolyte membrane.

In order to reach the temperature relevant for the conversion process in the reformer system, for example around 280 degrees centigrade, a burner is employed, typically, using anode waste gas for burning. For example, the exhaust gas of the burner has a temperature of 350-400 degrees centigrade and is used for heating the reformer by thermal heat exchange.

In the fuel cell system, the reformer system comprises an extruded reformer chamber, which has a constant cross section along a longitudinal axis, which is the axis along which the reformer chamber is extruded. The material of the extruded reformer chamber is typically an aluminium alloy, which also has a good thermal conductivity in order to provide thermal energy inside the reformer chamber by thermal conduction of heat through the reformer walls.

For example, the reformer chamber is an extruded as a single piece, thus a unitary extruded piece of metal. Alternatively, the reformer chamber is provided as two extruded half-parts which are then assembled. The two extruded half-parts have an extrusion direction parallel with the longitudinal axis of the reformer chamber. As a further alternative, the reformer chamber is assembled from more than two extruded parts, for example four quarter parts having an extrusion direction parallel with the longitudinal axis of the reformer chamber, once the multiple extruded pieces are assembled.

An inner reformer volume is enclosed by the reformer walls, the inner reformer volume containing a catalyst for catalytic conversion of the evaporated fuel into syngas when the fuel in evaporated form flows through the inner reformer volume. A fuel cell, for example fluid cell stack, is fluid-flow connected to the reformer chamber for receiving the syngas from the reformer chamber and is configured for converting the syngas into electricity. A burner is provided for supplying hot burner gas to the reformer chamber.

In particular, the reformer chamber comprises a plurality of fins on the outer side of the reformer walls in order to increase the outer surface of the reformer walls. The fins are integral extruded with the reformer walls, where the term "integral extruded" means that walls and fins are extruded together in a single process into a single piece of material. This is in contrast to systems where fins are brazed or welded onto heat exchangers. For example, the reformer chamber is extruded as a single piece with the fins and walls being part of this single piece. Alternatively, the reformer chamber is provided as two or more extruded parts, which are then assembled; however, also in this case, fins and walls for each half-part are integral extruded with the reformer walls as a single half-part piece.

In order to take up heat from the burner, the fins are provided in gas-flow connection to the burner and guiding the hot burner gas from the burner along the fins for taking up heat from the hot burner gas and conducting the heat through the reformer wall into the inner reformer volume.

The reformer chamber comprises a plurality of ribs extending from an inner side of the reformer walls towards a central region of the inner reformer volume in order to provide a large surface inside the inner reformer volume for heat transfer from the ribs to the evaporated fuel in the inner reformer volume when the evaporated fuel is flowing through the inner reformer volume. Advantageously, the ribs are integral extruded with the reformer walls, where the term "integral extruded" means that walls and fins are extruded together in a single process into a single piece of material, for example a single-piece reformer chamber or two half-parts

Typically, the ribs inside the inner reformer volume are substantially longer than the fins on the outer side of the reformer walls. Also, typically, the number of the ribs is substantially smaller than the number of the fins. For example, the number of fins is larger than 50 and the number of ribs is less than 25. Optionally, the length of the ribs is more than 20% of a width of the inner reformer volume, the width being calculated between opposite reformer walls. An example of such distance is between 20 mm and 500 mm, optionally between 50 mm and 200 mm.

A plurality of guide plates are provided inside the inner reformer volume, the plurality of guide plates comprising a first type of guide plates and a second type of guide plates. The first type and the second type of guide plates are arranged in alternating configuration, that is, one guide plate of the first type is followed by one guide plate of the second type, which in turn is followed by another guide plate of the first type. The first type of guide plates is abutting an inner side of the reformer walls and comprises a central aperture configured for blocking flow of evaporated fuel along the reformer walls and forcing flow of evaporated fuel through the central aperture. The second type of guide plates comprises a central blocking plate and open regions at the side walls for blocking flow of evaporated fuel through the central region of the inner reformer volume and for forcing flow of evaporated fuel towards the side walls. The alternating configuration of the guide plates forces the evaporated fuel in the inner reformer volume from the central region towards the reformer walls and back into the central region for radial mixing of the evaporated fuel and for improved heat transfer between the reformer walls and the evaporated fuel.

In case that the reformer chamber comprises ribs towards the centre of the inner reformer volume, the guide plates are configured as follows. In this case, the first type of guide plates comprises a central aperture and obstruction blades arranged between the ribs for blocking flow of evaporated fuel through spaces between the ribs and for forcing flow of evaporated fuel through the central aperture. The second type of guide plates comprises a central blocking plate and partially obstructing blades extending from the blocking plate partially into the spaces between the ribs for blocking flow of evaporated fuel through the central region of the inner reformer volume and for forcing flow of evaporated fuel through the spaces between the ribs near the inner side of the reformer walls. The alternating configuration forces the evaporated fuel in the inner reformer volume from the central region towards the reformer walls and into the spaces between the ribs and back into the central region.

Optionally, the reformer-fuel evaporator comprises a fuel evaporation channel integral extruded with the reformer walls. The term "integral extruded means" that the fuel evaporation channel and the reformer walls are extruded together as a single piece, for example as a single piece or half-part for the reformer chamber. Accordingly, the fuel evaporation channel extends parallel with the longitudinal axis of the reformer chamber from one end of the reformer chamber to the opposite end of the reformer chamber. This fuel evaporation channel is arranged for transfer of heat from the hot burner gas through a channel wall and into the fuel evaporation channel and to the fuel inside the fuel evaporation channel, thereby heating and evaporating the fuel when the fuel passes through the fuel evaporation channel.

For example, the channel wall of the fuel evaporation channel comprises an outer side and an opposite inner side, wherein the outer side comprises outer fins in fluid-flow connection with the burner and wherein the inner side comprises inner ribs extending into the fuel evaporation channel for heat transfer from the hot burner gas from the outer fins to the inner ribs and from the inner ribs to fuel flowing in the fuel evaporation channel.

In some embodiments, the reformer system comprises a cavity at one end of the reformer chamber. The cavity is in fluid-flow connection with the reformer-fuel evaporator, for example the fuel evaporation channel, for receiving evaporated fuel. The cavity is separated from the inner reformer volume by a diffuser plate which has a plurality of perforations distributed across the diffuser plate. The perforations are fluid-flow connecting the cavity with the inner reformer volume for distributing the evaporated fuel from the cavity evenly into the inner reformer volume when the evaporated fuel flows from the cavity through the perforations into the inner reformer volume.

In an advantageous configuration, the burner is provided coaxial with the reformer chamber and in longitudinal extension of the reformer chamber. For example, the burner and the reformer chamber are provided inside a single casing arranged for flow of hot burner gas from the burner towards an inner side of the casing, along the inner side of the casing to an end of the reformer chamber, and along the outer side of the reformer walls between the fins to an opposite end of the reformer chamber and out of the casing.

In order to provide evaporated burner fuel to the burner, a burner-fuel evaporator is provided. Thus, fuel for the burner and fuel for the reformer are evaporated in separate evaporators, namely a burner-fuel evaporator and a reformer-fuel evaporator, allowing independent fuel evaporation for the burner and for the reformer. For example, in start-up situations, it is important to evaporate only the amount of fuel necessary for getting the burner operating, whereas evaporation of fuel for the reformer is only done, once the burner is operating. Accordingly, the burner fuel evaporator is equipped with a separate heater, for example an electrical heater, for heating and evaporating the burner-fuel in start-up situations. For example, once, the burner has started operation, the hot gas from the burner is used for heating and evaporating the fuel for the reformer as well as evaporating the fuel for the burner. Optionally, the burner-fuel evaporator is located in a single casing together with the burner and the reformer, for example between the reformer chamber and the burner, and in gas-flow connection with the burner for receiving hot burner gas from the burner for heating of burner-fuel in the burner-fuel evaporator.

The initial objective is also achieved with a method as follows, which illustrates the method of operation of the various embodiments of the above fuel cell system. The method comprises
- providing a reformer system with an extruded reformer chamber, for example single piece reformer chamber, which has a constant cross section along a longitudinal axis with an inner reformer volume enclosed by reformer walls; providing the inner reformer volume with a catalyst;
- providing a burner, burning fuel to create hot burner gas and providing the hot burner gas to the reformer chamber and with the hot gas heating an outer side of the reformer walls, conducting the heat through the reformer walls into the inner reformer volume;
- receiving liquid fuel from a fuel tank, evaporating it in a reformer-fuel evaporator, supplying it to the reformer system, and catalytic converting the evaporated fuel into syngas while the fuel in evaporated form flows through the inner reformer volume;
- receiving the syngas from the reformer chamber by a fuel cell that is fluid-flow connected to the reformer chamber and converting the syngas into electricity;
- providing the reformer chamber with a plurality of fins on the outer side of the reformer walls, the fins being integral extruded with the reformer walls and in gas-flow connection to the burner,
- guiding the hot burner gas form the burner along the fins and taking up heat from the hot burner gas by the fins and conducting the heat taken up by the fins through the reformer walls into the inner reformer volume.

In case that the reformer chamber comprises a plurality of ribs integral extruded with the reformer walls and extending from an inner side of the reformer walls towards a central region of the inner reformer volume, the method comprises transferring heat from the ribs to the evaporated fuel in the inner reformer volume when the evaporated fuel is flowing through the inner reformer volume.

In the case of the reformer chamber is equipped with guide plates in alternating configuration, as described above, the method comprises forcing the evaporated fuel in the inner reformer volume from the central region towards the reformer walls and back into the central region for radial mixing of the evaporated fuel and for improved heat transfer between the reformer walls and the evaporated fuel.

In the case of a cavity being provided at one end of the reformer chamber with a perforated diffuser plate, as described above, the method further comprises providing a flow of evaporated fuel from the reformer-fuel evaporator into the cavity and distributing the evaporated fuel from the cavity evenly into the inner reformer volume through the perforations.

### SHORT DESCRIPTION OF THE DRAWINGS

The invention will be explained in more detail with reference to the drawing, where
- FIG. 1: is a sketch of a fuel cell principle
- FIG. 2: illustrates parts of a reformer system;
- FIG. 3: is a cross sectional view of a reformer chamber;
- FIG. 4: is a perspective cut-away illustration of the reformer chamber;
- FIG. 5: illustrates the gas flow inside the reformer chamber;
- FIG. 6: shows a tool arrangement for inserting the guide plates;
- FIG. 7: illustrates an alternative embodiment of a reformer chamber in a) cross sectional view, b) partial enhanced illustration of the fins
- FIG. 8: illustrates a reformer system and burner system in exploded view.

### DETAILED DESCRIPTION / PREFERRED EMBODIMENT

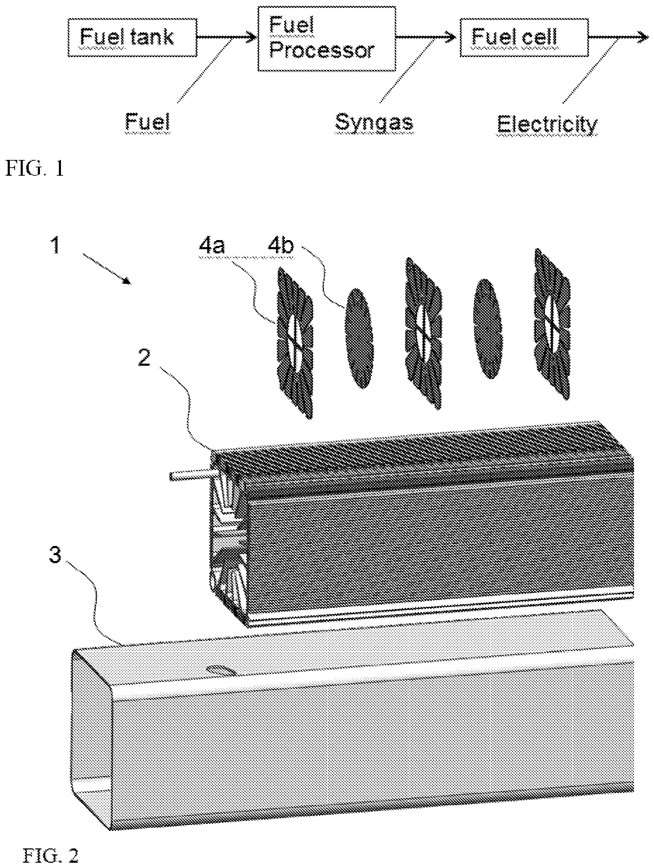

FIG. 1 shows a simple sketch for a fuel cell system. The fuel cell system comprises a fuel tank, a fuel processor and a fuel cell, for example fuel cell stack. Liquid fuel, for example a mixture of methanol and water, is supplied from the fuel tank to the fuel processor, which comprises an evaporator, in which the temperature of the liquid fuel is raised until evaporation of the fuel, and a fuel reformer for catalytic conversion of the fuel into syngas, for example by using a catalyser comprising copper. Syngas mainly contains hydrogen and carbon dioxide and a small content of water and carbon monoxide. The syngas is supplied to the fuel cell anode side of the proton electrolyte membrane, while oxygen, typically from air, is supplied from an air supply to the cathode side of the proton electrolyte membrane.

FIG. 2 illustrates a reformer system 1 with a reformer chamber 2 that has been extruded as a single piece, and a casing 3 into which the reformer chamber 2 fits when assembled. A plurality of guide plates 4a, 4b are also provided for fitting inside the reformer chamber 2.

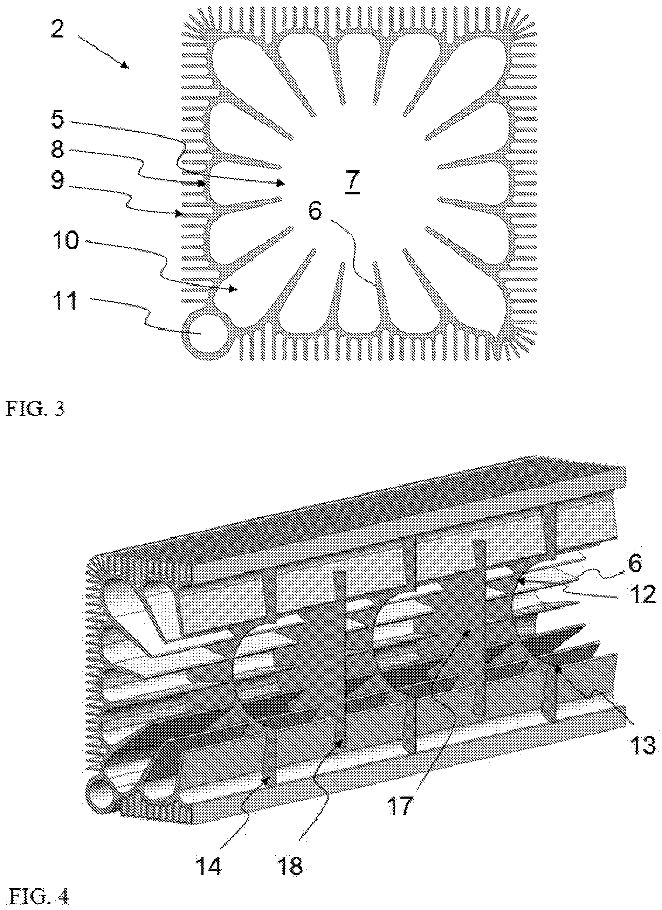

FIG. 3 shows a cross section of the single-piece reformer chamber 2. The term single-piece refers to the reformer chamber being made of a unitary extruded piece of metal, apart from end caps that close both ends of the reformer. However, it is also possible to provide the reformer chamber as an assembly of extruded parts, for example two extruded half-parts or four extruded quarter-parts. For simplicity, the shown extruded reformer chamber 2 is a single piece.

The reformer chamber 2 comprises an inner reformer volume 5 into which a plurality of ribs 6 extend towards a central region 7 which is free from such ribs 6. The inner reformer volume 5 is enclosed within reformer walls 8 having an inner side towards the inner reformer volume 5 and an outer side with a corrugated surface. As exemplified, the corrugated surface is provided with fins 9 that extend away from the reformer walls 8. As illustrated, the fins 9 are substantially smaller in width and length than the ribs 6 inside the reformer chamber 5. The fins 9 are configured for efficiently taking up heat from hot burner gas that flows along the outer side of the reformer walls 8. The reformer chamber 2 is made of a material that is a good heat conductor, for example aluminium or an aluminium alloy. Such material is also suitable for extrusion. The heat taken up by the fins 9 is conducted through the reformer walls 8 and into the reformer chamber 5. The ribs 6 that extend into the reformer chamber 5 effectively assists in this heat conduction towards the central region 7 and also promotes an even distribution of heat to the reformer gas, which during operation is flowing along the inner side of the reformer walls 8 and in the spaces 10 between the ribs 6.

For the reforming of the fuel, for example methanol-containing fuel, the fuel is preheated in a reformer-fuel evaporator, which in the present embodiment is a fuel evaporation channel 11 inside the single-piece reformer chamber 2. This fuel evaporation channel 11 extends along the entire reformer chamber 2 such that the fuel flows in the fuel evaporation channel 11 from one end to the opposite end of the reformer chamber 2, then, changes direction and flows in an opposite way through the inner reformer volume 5 of the reformer chamber 2. For the reforming, the inner reformer volume 5 is filled with a porous catalytic material 41 such that the fuel is reformed due to contact with the catalytic material 41 and due to the heat, as the reforming is an endothermic process. The catalytic material 41 is shown as pellets inside the inner reformer volume 5, the pellets forming a porous filling material in the inner reformer volume 5. An example of an alternative catalytic material is a coating on the inner wall of the reformer chamber 2.

As illustrated in FIG. 4, a plurality of a first type of guide plates 4a and a second type of guide plates 4b are provided inside the inner reformer volume 5. The first type of guide plates 4a comprises a ring structure 12 with a central aperture 13 and with obstruction blades 14 that extend from the ring 12 structure into the spaces 15 between the ribs and which fill the spaces 15 between the ribs 6. The first type of guide plates 4a allows flow of reformer gas through the central aperture 13 but blocking flow outside the central aperture 13. Optionally, as illustrated in FIG. 1, the central aperture comprises stabilising spokes 16, for example formed as a cross in the aperture 13. The second type of guide plates 4b comprises a central blocking plate 17 from which partially obstructing blades 18 extend into the spaces 10 between the ribs 6 for the purpose of being held by the ribs 6 but allowing flow of gas between the ribs 6 but not through the central region 7 of the inner reformer volume 5. The successive alternation of the first and the second type of guide plates forces the flow of the reformer gas from the central region 7 of the inner reformer volume 5 towards the side walls 8 and back into the central region 7.

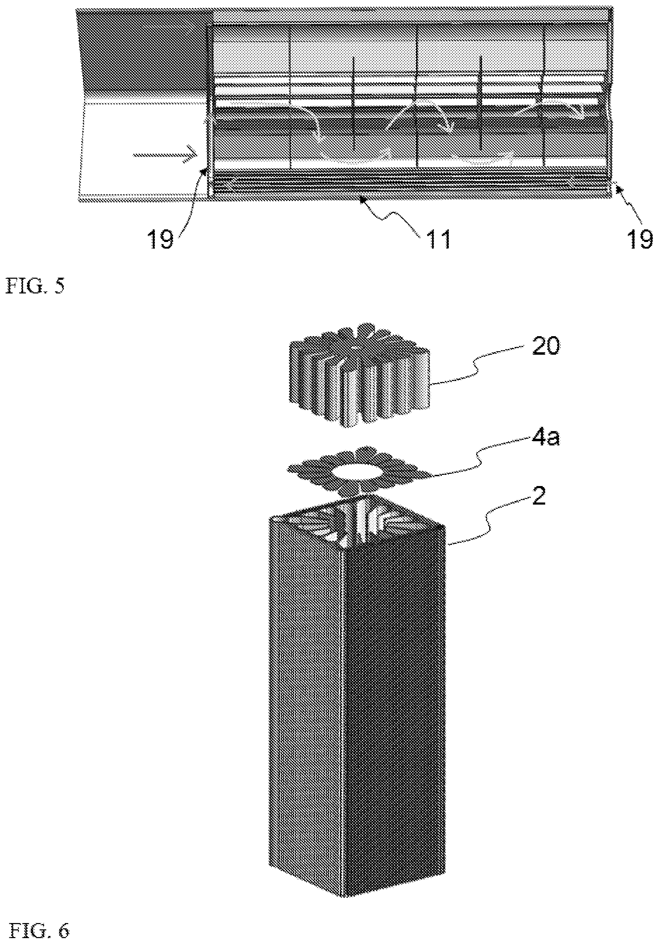

This is illustrated in FIG. 5. The fuel enters the fuel evaporation channel 11 and flows, as illustrated by arrows 19, from the right end to the left end of the fuel evaporation channel 11, where the fuel after evaporation enter the reformer volume 5. The fuel gas flows through the central aperture 13 of the first guide plate 4a, which is of the first type of guide plates. The central blocking plate 17 of the second guide plate 4b, which is of the second type of guide plates 4b forces the flow towards the reformer walls 8 in the spaces 10 between the ribs 6. The third plate and fifth plate are of the first type 4a and the fourth plate of the second type 4b of guide plates, which results a flow that alternates between central flow and decentral flow. This change results in efficient mixing of the reformer gas, which avoids different temperature in the central region as compared to the rim-part of the flow. For this reason, such mixing is called radial mixing, as the mixing occurs between the centre and the outer rim of the flow.

FIG. 6 illustrates a tool 20 for inserting guide plates 4a, 4b into the reformer chamber 2. The tool 20 is used by pushing the guide plate 4a evenly in lateral orientation into the inner reformer volume 5 such that the obstruction blades 14 are abutting the ribs 6 and slide along them by further press from the tool 20 until correctly positioned. Due to the abutment of the obstruction blades 14 on the ribs without clearance in between, there is no possibility of the plates not being oriented lateral to the longitudinal direction of the reformer chamber.

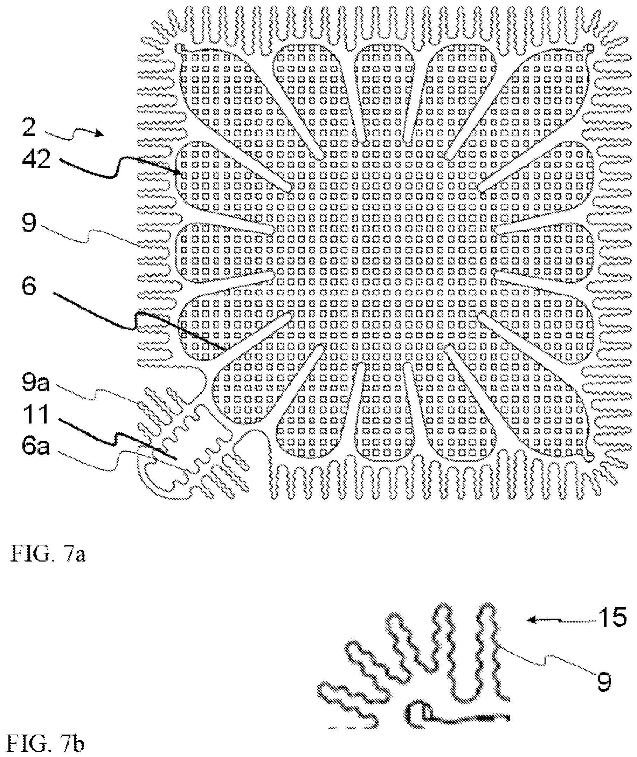

FIG. 7a illustrates an alternative embodiment of a reformer chamber 2. In this case, the fins 9 have a corrugated surface, as illustrated in more detail in FIG. 7b. The reason for the corrugations 15 is a larger surface area for interacting with and taking up heat from the hot burner gas that is flowing between the fins along the outer side of the reformer wall 8. However, the ribs 6 in the inside the reformer volume 6 are not corrugated. An advantage of smooth ribs is that the guide plate easier slide along the ribs 6 when inserted as illustrated in FIG. 6. Also, due to the efficient radial mixing of the reformer gas due to the guide plates 4a, 4b, the heat exchange between the ribs 6 and the reformer gas is sufficiently efficient such that there is no need for corrugations on the ribs 6.

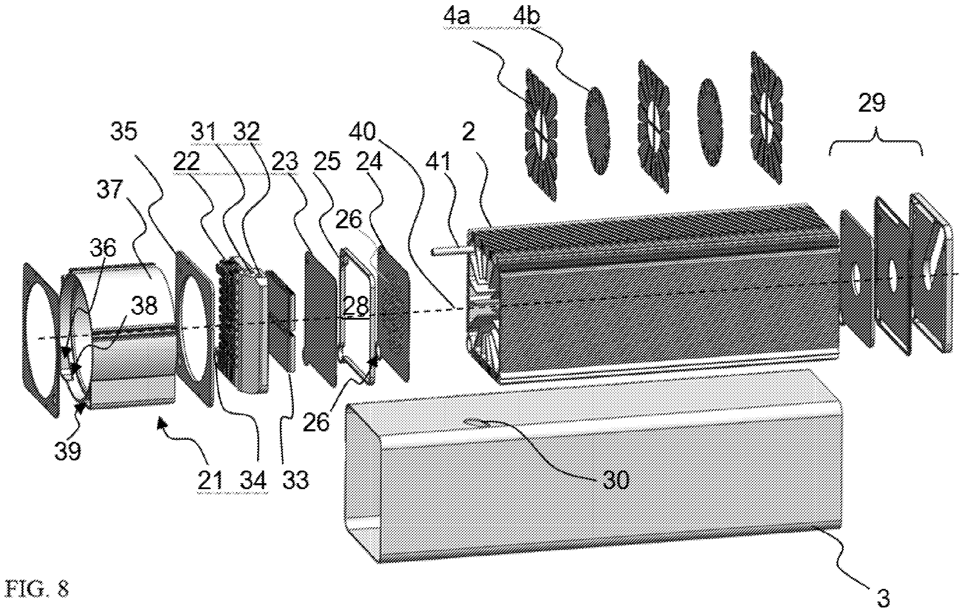

FIG. 8 is an exploded view of an assembly comprising a burner 21, an evaporator 22 and a reformer system 1. As explained above, the reformer system 1 comprise a reformer chamber 2, a casing 3, and guide plates 4a, 4b. In addition, there is provided an end cap 23 for the reformer chamber. Between the reformer chamber 2 and the end-cap 23, there is provided a diffuser plate 24 on an opposite side of a ring-formed spacer 25. The diffuser plate 24 comprises a plurality of perforations 27 distributed across the diffuser plate 24. Fuel for the reformer system 1 flows through from one end to the opposite end of the fuel evaporation channel 11 in the reformer chamber 2; in the present case from the right end to the left end of the fuel evaporation channel 11. Through an opening 26 in the diffuser plate 24, which is in fluid-flow communication with the fluid channel 11, evaporated fuel from the fuel evaporation channel 11 traverses the diffuser plate 24 and enters a slim cavity 28 delimited by the end cap 23, the diffuser plate 24 and the ring-formed spacer 25. From this slim cavity 28, the fuel gas flows through the perforations 27 into the reformer chamber 2. The perforations 27 are relatively small in order for the plurality of perforations 27 in combination causing a relatively even flow of the fuel gas through the diffuser plate 24 and into the reformer chamber 2.

Once, inside the reformer chamber 2, the fuel gas undergoes a reforming process due to catalytic material inside the reformer chamber 2. A temperature gauge 42 is inserted into the single piece reformer chamber 2 for measuring the temperature of the catalytic material. The guide plates 4a, 4b cause radial mixing as explained above. When the reformed fuel gas reaches the opposite end, which is the right end of the reformer chamber 2 in the drawing, it flows through a central aperture of an end plate assembly 29, flows in the end plate assembly 29 from the centre to a corner 30 and leaves the reformer system 1 in order to be supplied to the fuel cells, which are not shown in this figure.

Hot gas for flow along the outer side of the reformer walls 8 is provided by the burner 21. Fuel for the burner 21 enters through opening 30 in casing 3 and flows into burner-fuel evaporator 22. The burner-fuel evaporator 22 comprises at its upper side an evaporator fuel opening 32 for receiving fuel and an evaporator heater opening 31 for receiving an electrical heater, which is used in start-up situations until the burner 21 starts operating for delivery of sufficient hot gas for the evaporator 22. From the evaporator fuel opening 32, the fuel passes through the burner-fuel evaporator 22, for example by flow along a meander-formed path, determined by restriction plates 33, before the evaporated fuel leaves the evaporator 22 through a fuel exit 34. The fuel flows through a gasket 35 into a first burner channel 36 in the burner housing 37 and through a recess 38 into the inner volume of the burner 21. For the burning, oxygen is supplied through a second burner channel 39 in the inner volume of the burner 21. For example, the second burner channel 39 receives waste gas from the fuel cell, containing a minor residue of fuel gas as well as remaining oxygen from air.

Once, the burner 21 is operating, exhaust gas is leaving the burner 21, flows onto and around the burner-fuel evaporator 22, around the slim cavity 28 and along the outer side of the reformer wall 8 of the reformer chamber 2. The reformer chamber 2, the burner 21, and the evaporator 22 are all contained inside the casing 3, resulting in a compact system.

A number of advantages are achieved by the burner 21 not being integrated in the single-piece reformer chamber 2. First of all, the reformer chamber 2 is easier to optimise for efficient reforming without the reformer chamber becoming bulky. This is an important feature, especially, if the reformer system 1 is used in assemblies where minimal space is an issue, for example in fuel cell systems for automobiles. Secondly, the design of the burner 21 is independent from the reformer system 1, which allows the design to be changed independently from the reformer system 1 relatively to the burner 21. A further advantage is that the burner 21 can be selected among low-cost off-the-shelf burners, for example as already existing in automobile industry. Thus, the system as presented here combines relatively low cost standard components with an optimised reformer chamber 2. Through optimisation of the reformer chamber 2 design, a substantial efficacy improvement could be achieved, whereas burner optimisation cannot be expected to yield much improvement with respect to overall efficacy. For example, due to the optimisation as explained, especially the radial mixing, a pressure loss has been achieved of about 900 Pa, which is a substantial reduction from typical pressure loss values above 1500 Pa in conventional reformed systems with a similarly sized reformer chamber 2. This pressure loss reduction implies higher flow rate and, accordingly, higher efficiency. The increased efficiency allows decrease of the reformer system 1 for given reforming capacity and efficiency, which is highly advantageous is automobile industry.

As an example, the following parameters apply. For a HTPEM stack delivering 5 kW, typical dimensions are 0.5 m x 0.25 m x 0.15 m. For example, the entire fuel cell stack with burner, evaporator and reformer have a weight of around 20 kg, and an entire fuel cell system including electronics, cooling-liquid pump, first heat exchanger and valve weighs in the order of 40-65 kg.

### Reference numbers:

1 reformer system
2 reformer chamber
3 casing
4a first type of guide plates
4b second type of guide plates
5 inner reformer volume
6 ribs
6a inner ribs of fuel evaporation channel 11
7 central region of reformer volume 5
8 reformer walls
9 fins that extend away from the reformer walls 8
9a outer fins of fluid channel 11
10 spaces between the ribs 6
11 fuel evaporation channel along the entire reformer chamber 2
12 ring structure of first type of guide plates 4a
13 central aperture in ring structure 12 of first type of guide plates 4a
14 obstruction blades extending from ring structure 12 first type of guide plates 4a
15 corrugations in fins 9
17 central blocking plate of the second type of guide plates 4b
18 partially obstructing blade of second type of guide plates 4b
19 arrow illustrating flow of fuel in fuel evaporation channel 11
20 tool for inserting guide plates 4a, 4b
21 burner
22 burner-fuel evaporator
23 end-cap of reformer chamber
24 diffuser plate
25 spacer
26 opening in diffuser plate 24 in communication with fuel evaporation channel 11
27 perforations in diffuser plate 24
28 slim cavity delimited by the end cap 23, the diffuser plate 24 and the ring-formed spacer 25
29 end plate assembly
30 opening in casing 3 for fuel supply to burner 21
31 opening for heating element in burner-fuel evaporator
32 evaporator heater opening
33 restriction plates in burner-fuel evaporator 22
34 fuel exit of burner-fuel evaporator 22
35 gasket between burner-fuel evaporator and burner 21
36 first burner channel in burner housing 37 for burner-fuel supply to the burner 21
37 burner housing
38 recess in burner housing 37
39 second burner channel in burner housing 37 for oxygen supply in the burner 21
40 longitudinal axis of the reformer chamber (2)
41 temperature gauge for catalyst material
42 temperature gauge

## Claims

1. A fuel cell system comprising
- a fuel tank and a reformer-fuel evaporator for evaporating liquid fuel from the fuel tank and providing the evaporated fuel to a reformer system (1),
- a reformer system (1) with an extruded reformer chamber (2) that has a constant cross section along a longitudinal axis (40) with an inner reformer volume (5) enclosed by reformer walls (8), the inner reformer volume (5) containing a catalyst for catalytic conversion of the evaporated fuel into syngas when the fuel in evaporated form flows through the inner reformer volume (5);
- a fuel cell fluid-flow connected to the reformer chamber (2) for receiving the syngas from the reformer chamber (2) and configured for converting the syngas into electricity,
- a burner (21) for providing hot burner gas to the reformer chamber (2),
wherein the reformer chamber (2) comprises a plurality of fins (9) on the outer side of the reformer walls (8), the fins (9) being integral extruded with the reformer walls (8), the fins (9) being provided in gas-flow connection to the burner (21) for guiding the hot burner gas form the burner (21) along the fins (9) for taking up heat from the hot burner gas and conducting the heat through the reformer wall (8) into the inner reformer volume (5), wherein the reformer chamber (2) comprises a plurality of ribs (6) integral extruded with the reformer walls (8) and extending from an inner side of the reformer walls (8) towards a central region (7) of the inner reformer volume (5) for heat transfer from the ribs (6) to the evaporated fuel in the inner reformer volume (5) when the evaporated fuel is flowing through the inner reformer volume (5),
**characterized in that** a plurality of guide plates (4a, 4b) are provided inside the inner reformer volume (5), the plurality of guide plates (4a, 4b) comprising a first type of guide plates (4a) and a second type of guide plates (4b), the first type and the second type of guide plates being arranged in alternating configuration; wherein the first type of guide plates (4a) comprises a central aperture (13) and obstruction blades (14) arranged between the ribs (6) for blocking flow of evaporated fuel through spaces (10) between the ribs (6) and for forcing flow of evaporated fuel through the central aperture (13); wherein the second type of guide plates (4b) comprises a central blocking plate (17) and partially obstructing blades (18) extending from the blocking plate (17) partially into the spaces (10) between the ribs (6) for blocking flow of evaporated fuel through the central region (7) of the inner reformer volume (5) and for forcing flow of evaporated fuel through the spaces (10) between the ribs (6); wherein the alternating configuration is configured for forcing the evaporated fuel in the inner reformer volume (5) from the central region (7) towards the reformer walls (8) and into the spaces between the ribs (6) and back into the central region (7) for radial mixing of the evaporated fuel and for improved heat transfer between the reformer walls (8) and the evaporated fuel.

2. A fuel cell system according to claim 1, wherein the reformer chamber is an extruded single piece.

3. A fuel cell system according to claim 1 or 2, wherein a length of the ribs (6) is longer than a length of the fins (9) and the number of the ribs (6) is smaller than the number of the fins (9).

4. A fuel cell system according to claim 3, wherein the length of the ribs (6) is more than 20% of a width of the inner reformer volume (5), the width being calculated between opposite reformer walls (8).

5. A fuel cell system according to any preceding claim, wherein the reformer-fuel evaporator comprises a fuel evaporation channel (11) integral extruded with the reformer walls (8), the fuel evaporation channel (11) extending parallel with the longitudinal axis (40) of the reformer chamber (2) from one end to the opposite end of the reformer chamber (2), wherein the fuel evaporation channel (11) is arranged for transfer of heat from the hot burner gas through the heat channel (11) and to the fuel in the fuel evaporation channel (11) for heating and evaporating the fuel when the fuel passes through the fuel evaporation channel (11).

6. A fuel cell system according to claim 5, wherein the fuel evaporation channel (11) comprises an outer side and an opposite inner side, wherein the outer side comprises outer fins (9a) in fluid-flow connection with the burner (21) and wherein the inner side comprises inner ribs (6a) extending into the fuel evaporation channel (11) for heat transfer from the hot burner gas from the outer fins (9a) to the inner ribs (6a) and from the inner ribs (6a) to fuel flowing in the fuel evaporation channel (11).

7. A fuel cell system according to any preceding claim, wherein the reformer system (1) comprises a cavity (28) at one end of the reformer chamber (2), the cavity (28) being in fluid-flow connection with the reformer-fuel evaporator (11) for receiving evaporated fuel, the cavity (28) being separated from the inner reformer volume (5) by a diffuser plate (24), the diffuser plate (24) being provided with a plurality of perforations (26) distributed across the diffuser plate (24), the perforations fluid-flow connecting the cavity (28) with the inner reformer volume (5) for distributing the evaporated fuel from the cavity (28) evenly into the inner reformer volume (5) when the evaporated fuel flows from the cavity (28) through the perforations (26) into the inner reformer volume (5).

8. A fuel cell system according to any preceding claim, wherein the burner (21) is provided coaxial with the reformer chamber (2) and in longitudinal extension of the reformer chamber (2), and wherein the burner (21) and the reformer chamber (2) are provided inside a single casing (3) arranged for flow of hot burner gas from the burner (21) towards an inner side of the casing (3), along the inner side of the casing (3) to an end of the reformer chamber (2), and along the outer side of the reformer walls (8) between the fins (9) to an opposite end of the reformer chamber (2) and out of the casing (3).

9. A fuel cell system according to claim 8, comprising a burner-fuel evaporator (22) inside the casing (3) for providing evaporated burner fuel to the burner (21); wherein the burner-fuel evaporator (22) is located between the reformer chamber (2) and the burner (21) and in gas-flow connection with the burner (21) for receiving hot burner gas from the burner (21) for heating of burner-fuel in the burner-fuel evaporator (22); the burner fuel evaporator (22) being equipped with an electrical heater for heating and evaporating the burner-fuel in start-up situations.

10. A method of operating a fuel cell system according to any preceding claim, wherein the method comprises
- providing a reformer system (1) with an extruded reformer chamber (2) that has a constant cross section along a longitudinal axis (40) with an inner reformer volume (5) enclosed by reformer walls (8); providing the inner reformer volume (5) with a catalyst;
- providing a burner (21), burning fuel to create hot burner gas and providing the hot burner gas to the reformer chamber (2) and with the hot gas heating the reformer walls (8), conducting the heat through the reformer walls (8) into the inner reformer volume (5);
- receiving liquid fuel from a fuel tank, evaporating it in a reformer-fuel evaporator (11), supplying it to the reformer system (1), and catalytic converting the evaporated fuel into syngas while the fuel in evaporated form flows through the inner reformer volume (5);
- receiving the syngas from the reformer chamber (2) by a fuel cell that is fluid-flow connected to the reformer chamber (2) and converting the syngas into electricity,
wherein the reformer chamber (2) comprises a plurality of fins (9) on the outer side of the reformer walls (8), the fins (9) being integral extruded with the reformer walls (8), the fins (9) being provided in gas-flow connection to the burner (21), wherein the method comprises guiding the hot burner gas form the burner (21) along the fins (9) and taking up heat from the hot burner gas by the fins and conducting the heat taken up by the fins (9) through the reformer walls (8) into the inner reformer volume (5), wherein the reformer chamber (2) comprises a plurality of ribs (6) integral extruded with the reformer walls (8) and extending from an inner side of the reformer walls (8) towards a central region (7) of the inner reformer volume (5), and the method comprises transferring heat from the ribs (6) to the evaporated fuel in the inner reformer volume (5) when the evaporated fuel is flowing through the inner reformer volume (5), **characterized in that** the method comprises providing a plurality of guide plates (4a, 4b) inside the inner reformer volume (5), the plurality of guide plates (4a, 4b) comprising a first type of guide plates (4a) and a second type of guide plates (4b), the first type and the second type of guide plates being arranged in alternating configuration; wherein the first type of guide plates (4a) is abutting an inner side of the reformer walls (8) and comprises a central aperture (13) configured for blocking flow of evaporated fuel along the reformer walls (8) and forcing flow of evaporated fuel through the central aperture (13); wherein the second type of guide plates (4b) comprises a central blocking plate (17) and partially obstructing blades (18) extending from the blocking plate (17) partially into the spaces (10) between the ribs (6), providing open regions at the side walls (8), for blocking flow of evaporated fuel through the central region (7) of the inner reformer volume (5) and for forcing flow of evaporated fuel towards the side walls (8); wherein the method comprises, by alternating configuration of the guide plates (4a, 4b), forcing the evaporated fuel in the inner reformer volume (5) from the central region (7) towards the reformer walls (8) into the spaces between the ribs (6) and back into the central region (7) for radial mixing of the evaporated fuel and for improved heat transfer between the reformer walls (8) and the evaporated fuel.

11. A method according to claim 10, wherein the method comprises providing a cavity (28) at one end of the reformer chamber (2), the cavity (28) being in fluid-flow connection with the reformer-fuel evaporator (11) and separated from the inner reformer volume (5) by a diffuser plate (24), the diffuser plate (24) being provided with a plurality of perforations (26) distributed across the diffuser plate (24); the method further comprising providing a flow of evaporated fuel from the reformer-fuel evaporator (11) into the cavity (28) and distributing the evaporated fuel from the cavity (28) evenly into the inner reformer volume (5) through the perforations (26).

## Patentansprüche

1. Brennstoffzellensystem, umfassend
- einen Brennstofftank und einen Reformer-Brennstoffverdampfer zum Verdampfen von flüssigem Brennstoff aus dem Brennstofftank und zum Bereitstellen des verdampften Brennstoffs an ein Reformersystem (1),
- ein Reformersystem (1) mit einer extrudierten Reformerkammer (2), die einen konstanten Querschnitt entlang einer Längsachse (40) mit einem von Reformerwänden (8) umschlossenen inneren Reformervolumen (5) aufweist, wobei das innere Reformervolumen (5) einen Katalysator für die katalytische Umwandlung des verdampften Brennstoffs in Synthesegas enthält, wenn der Brennstoff in verdampfter Form durch das innere Reformervolumen (5) fließt;
- einen mit der Reformerkammer (2) verbundenen Brennstoffzellen-Flüssigkeitsstrom zum Aufnehmen des Synthesegases aus der Reformerkammer (2) und konfiguriert zum Umwandeln des Synthesegases in Elektrizität,
- einen Brenner (21) zum Bereitstellen von heißem Brennergas an die Reformerkammer (2),
wobei die Reformerkammer (2) eine Vielzahl von Rippen (9) auf der Außenseite der Reformerwände (8) umfasst, wobei die Rippen (9) integral mit den Reformerwänden (8) extrudiert sind, wobei die Rippen (9) in Gasströmungsverbindung mit dem Brenner (21) bereitgestellt sind, um das heiße Brennergas vom Brenner (21) entlang der Rippen (9) zum Aufnehmen von Wärme aus dem heißen Brennergas und zum Leiten der Wärme durch die Reformerwand (8) in das innere Reformervolumen (5) zu führen, wobei die Reformerkammer (2) eine Vielzahl von Rippen (6) umfasst, die integral mit den Reformerwänden (8) extrudiert ist und sich von einer Innenseite der Reformerwände (8) zu einem zentralen Bereich (7) des inneren Reformervolumens (5) erstreckt, um Wärme von den Rippen (6) auf den verdampften Brennstoff im inneren Reformervolumen (5) zu übertragen, wenn der verdampfte Brennstoff durch das innere Reformervolumen (5) fließt, **dadurch gekennzeichnet, dass** eine Vielzahl von Führungsplatten (4a, 4b) innerhalb des inneren Reformervolumens (5) bereitgestellt ist, wobei die Vielzahl von Führungsplatten (4a, 4b) einen ersten Typ von Führungsplatten (4a) und einen zweiten Typ von Führungsplatten (4b) umfasst, wobei der erste Typ und der zweite Typ von Führungsplatten in wechselnder Konfiguration angeordnet sind; wobei der erste Typ von Führungsplatten (4a) eine zentrale Öffnung (13) und zwischen den Rippen (6) angeordnete blockierende Schaufeln (14) zum Blockieren des Stroms von verdampftem Brennstoff durch Räume (10) zwischen den Rippen (6) und zum Zwingen des Stroms von verdampftem Brennstoff durch die zentrale Öffnung (13) umfasst; wobei der zweite Typ von Führungsplatten (4b) eine zentrale Blockierplatte (17) und teilweise blockierende Schaufeln (18) umfasst, die sich von der Blockierplatte (17) teilweise in die Räume (10) zwischen den Rippen (6) erstrecken, um den Fluss von verdampftem Brennstoff durch den zentralen Bereich (7) des inneren Reformervolumens (5) zu blockieren und den Fluss von verdampftem Brennstoff durch die Räume (10) zwischen den Rippen (6) zu zwingen; wobei die abwechselnde Konfiguration konfiguriert ist, um den verdampften Brennstoff im inneren Reformervolumen (5) vom zentralen Bereich (7) in Richtung der Reformerwände (8) und in die Räume zwischen den Rippen (6) und zurück in den zentralen Bereich (7) zum radialen Mischen des verdampften Brennstoffs und zur verbesserten Wärmeübertragung zwischen den Reformerwänden (8) und dem verdampften Brennstoff zu zwingen.

2. Brennstoffzellensystem nach Anspruch 1, wobei die Reformerkammer ein extrudiertes Einzelstück ist.

3. Brennstoffzellensystem nach Anspruch 1 oder 2, wobei eine Länge der Rippen (6) länger ist als eine Länge der Rippen (9) und die Anzahl der Rippen (6) kleiner ist als die Anzahl der Rippen (9).

4. Brennstoffzellensystem nach Anspruch 3, wobei die Länge der Rippen (6) mehr als 20 % einer Breite des inneren Reformervolumens (5) beträgt, wobei die Breite zwischen gegenüberliegenden Reformerwänden (8) berechnet wird.

5. Brennstoffzellensystem nach einem der vorstehenden Ansprüche, wobei der Reformer-Brennstoffverdampfer einen mit den Reformerwänden (8) integral extrudierten Brennstoffverdampfungskanal (11) umfasst, wobei sich der Brennstoffverdampfungskanal (11) parallel zur Längsachse (40) der Reformerkammer (2) von einem Ende bis zum gegenüberliegenden Ende der Reformerkammer (2) erstreckt, wobei der Brennstoffverdampfungskanal (11) zum Übertragen von Wärme aus dem heißen Brennergas durch den Wärmekanal (11) und auf den Brennstoff in dem Brennstoffverdampfungskanal (11) zum Erwärmen und Verdampfen des Brennstoffs angeordnet ist, wenn der Brennstoff durch den Brennstoffverdampfungskanal (11) geleitet wird.

6. Brennstoffzellensystem nach Anspruch 5, wobei der Brennstoffverdampfungskanal (11) eine Außenseite und eine gegenüberliegende Innenseite umfasst, wobei die Außenseite äußere Rippen (9a) in Flüssigkeitsstromverbindung mit dem Brenner (21) umfasst und wobei die Innenseite innere Rippen (6a) umfasst, die sich in den Brennstoffverdampfungskanal (11) erstrecken, um Wärme vom heißen Brennergas von den äußeren Rippen (9a) auf die inneren Rippen (6a) und von den inneren Rippen (6a) auf den im Brennstoffverdampfungskanal (11) fließenden Brennstoff zu übertragen.

7. Brennstoffzellensystem nach einem der vorstehenden Ansprüche, wobei das Reformersystem (1) einen Hohlraum (28) an einem Ende der Reformerkammer (2) umfasst, wobei der Hohlraum (28) in Flüssigkeitsstromverbindung mit dem Reformer-Brennstoffverdampfer (11) zum Aufnehmen von verdampftem Brennstoff steht und der Hohlraum (28) durch eine Diffusorplatte (24) vom inneren Reformervolumen (5) getrennt ist, die Diffusorplatte (24) mit einer Vielzahl von Perforationen (26) bereitgestellt ist, die über die Diffusorplatte (24) verteilt ist, wobei der Perforationsflüssigkeitsstrom den Hohlraum (28) mit dem inneren Reformervolumen (5) verbindet, um den verdampften Brennstoff aus dem Hohlraum (28) gleichmäßig in das innere Reformervolumen (5) zu verteilen, wenn der verdampfte Brennstoff aus dem Hohlraum (28) durch die Perforationen (26) in das innere Reformervolumen (5) fließt.

8. Brennstoffzellensystem nach einem der vorstehenden Ansprüche, wobei der Brenner (21) koaxial mit der Reformerkammer (2) und in Längsausdehnung von der Reformerkammer (2) bereitgestellt ist, und wobei der Brenner (21) und die Reformerkammer (2) innerhalb eines einzigen Gehäuses (3) bereitgestellt sind, das für den Durchfluss von heißem Brennergas vom Brenner (21) zu einer Innenseite des Gehäuses (3) angeordnet ist, entlang der Innenseite des Gehäuses (3) zu einem Ende der Reformerkammer (2) und entlang der Außenseite der Reformerwände (8) zwischen den Rippen (9) zu einem gegenüberliegenden Ende der Reformkammer (2) und aus dem Gehäuse (3).

9. Brennstoffzellensystem nach Anspruch 8, umfassend einen Brenner-Brennstoffverdampfer (22) im Inneren des Gehäuses (3) zum Bereitstellen von verdampftem Brennerbrennstoff an den Brenner (21); wobei der Brenner-Brennstoffverdampfer (22) zwischen der Reformerkammer (2) und dem Brenner (21) und in Gasströmungsverbindung mit dem Brenner (21) zum Aufnehmen von heißem Brennergas vom Brenner (21) zum Erwärmen von Brennerbrennstoff im Brenner-Brennstoffverdampfer (22) angeordnet ist; wobei der Brenner-Brennstoffverdampfer (22) mit einer elektrischen Heizung zum Erwärmen und Verdampfen des Brenner-Brennstoffs in Anlaufsituationen ausgestattet ist.

10. Verfahren zum Betreiben eines Brennstoffzellensystems nach einem der vorstehenden Ansprüche, wobei das Verfahren Folgendes umfasst:
- Bereitstellen eines Reformersystems (1) mit einer extrudierten Reformerkammer (2), die einen konstanten Querschnitt entlang einer Längsachse (40) mit einem von Reformerwänden (8) umschlossenen inneren Reformervolumen (5) aufweist; Bereitstellen des inneren Reformervolumens (5) mit einem Katalysator;
- Bereitstellen eines Brenners (21), Verbrennen von Brennstoff zum Erzeugen von heißem Brennergas und Bereitstellen des heißen Brennergases an die Reformerkammer (2) und Erwärmen der Reformerwände (8) mit dem Heißgas, Leiten der Wärme durch die Reformerwände (8) in das innere Reformervolumen (5);
- Aufnehmen von flüssigem Brennstoff aus einem Brennstofftank, Verdampfen desselben in einem Reformer-Brennstoffverdampfer (11), Zuführen desselben zum Reformersystem (1) und katalytische Umwandlung des verdampften Brennstoffs in Synthesegas, während der Brennstoff in verdampfter Form durch das innere Reformervolumen (5) fließt;
- Aufnehmen des Synthesegases aus der Reformerkammer (2) durch eine Brennstoffzelle, die mit der Reformerkammer (2) in Flüssigkeitsstromverbindung steht, und Umwandeln des Synthesegases in Elektrizität, wobei die Reformerkammer (2) eine Vielzahl von Rippen (9) auf der Außenseite der Reformerwände (8) umfasst, wobei die Rippen (9) integral mit den Reformerwänden (8) extrudiert sind, wobei die Rippen (9) in Gasströmungsverbindung mit dem Brenner (21) bereitgestellt sind, wobei das Verfahren das Führen des heißen Brennergases vom Brenner (21) entlang der Rippen (9) und die Wärmeaufnahme aus dem heißen Brennergas durch die Rippen und das Leiten der von den Rippen (9) aufgenommenen Wärme durch die Reformerwände (8) in das innere Reformervolumen (5) umfasst, wobei die Reformerkammer (2) eine Vielzahl von Rippen (6) umfasst, die integral mit den Reformerwänden (8) extrudiert ist und sich von einer Innenseite der Reformerwände (8) zu einem zentralen Bereich (7) des inneren Reformervolumens (5) erstreckt, und das Verfahren das Übertragen von Wärme von den Rippen (6) auf den verdampften Brennstoff in dem inneren Reformervolumen (5) umfasst, wenn der verdampfte Brennstoff durch das innere Reformervolumen (5) fließt, **dadurch gekennzeichnet, dass** das Verfahren das Bereitstellen einer Vielzahl von Führungsplatten (4a, 4b) innerhalb des inneren Reformervolumens (5) umfasst, wobei die Vielzahl von Führungsplatten (4a, 4b) einen ersten Typ von Führungsplatten (4a) und einen zweiten Typ von Führungsplatten (4b) umfasst, wobei der erste Typ und der zweite Typ von Führungsplatten in wechselnder Konfiguration angeordnet sind; wobei der erste Typ von Führungsplatten (4a) an einer Innenseite der Reformerwände (8) anliegt und eine zentrale Öffnung (13) umfasst, die konfiguriert ist, um den Strom des verdampften Brennstoffs entlang der Reformerwände (8) zu blockieren und den Strom des verdampften Brennstoffs durch die zentrale Öffnung (13) zu zwingen; wobei der zweite Typ von Führungsplatten (4b) eine zentrale Blockierplatte (17) und teilweise blockierende Schaufeln (18) umfasst, die sich von der Blockierplatte (17) teilweise in die Räume (10) zwischen den Rippen (6) erstrecken und offene Bereiche an den Seitenwänden (8) bereitstellen, um den Strom von verdampftem Brennstoff durch den zentralen Bereich (7) des inneren Reformervolumens (5) zu blockieren und um den Strom von verdampftem Brennstoff zu den Seitenwänden (8) zu zwingen; wobei das Verfahren durch abwechselnde Konfiguration der Führungsplatten (4a, 4b) das Zwingen des verdampften Brennstoffs im inneren Reformervolumen (5) vom zentralen Bereich (7) zu den Reformerwänden (8) in die Räume zwischen den Rippen (6) und zurück in den zentralen Bereich (7) zum radialen Mischen des verdampften Brennstoffs und zur verbesserten Wärmeübertragung zwischen den Reformerwänden (8) und dem verdampften Brennstoff umfasst.

11. Verfahren nach Anspruch 10, wobei das Verfahren das Bereitstellen eines Hohlraums (28) an einem Ende der Reformerkammer (2) umfasst, wobei der Hohlraum (28) in Flüssigkeitsstromverbindung mit dem Reformer-Brennstoffverdampfer (11) steht und durch eine Diffusorplatte (24) vom inneren Reformervolumen (5) getrennt ist, wobei die Diffusorplatte (24) mit einer Vielzahl von Perforationen (26) bereitgestellt ist, die über die Diffusorplatte (24) verteilt ist; wobei das Verfahren ferner das Bereitstellen eines Stroms von verdampftem Brennstoff aus dem Reformer-Brennstoffverdampfer (11) in den Hohlraum (28) und das gleichmäßige Verteilen des verdampften Brennstoffs aus dem Hohlraum (28) in das innere Reformervolumen (5) durch die Perforationen (26) umfasst.

## Revendications

1. Système de pile à combustible comprenant
- un réservoir de combustible et un évaporateur de combustible de reformateur pour évaporer le combustible liquide du réservoir de combustible et fournir le combustible évaporé à un système de reformateur (1),
- un système de reformateur (1) avec une chambre de reformateur extrudée (2) qui présente une section transversale constante le long d'un axe longitudinal (40) avec un volume de reformateur interne (5) entouré par des parois de reformateur (8), le volume de reformateur interne (5) contenant un catalyseur pour la conversion catalytique du combustible évaporé en gaz de synthèse lorsque le combustible sous forme évaporée s'écoule à travers le volume de reformateur interne (5) ;
- un écoulement de fluide de pile à combustible relié à la chambre de reformateur (2) pour recevoir le gaz de synthèse depuis la chambre de reformateur (2) et configuré pour convertir le gaz de synthèse en électricité,
- un brûleur (21) pour fournir du gaz de brûleur chaud à la chambre de reformateur (2),
dans lequel la chambre de reformateur (2) comprend une pluralité d'ailettes (9) sur le côté externe des parois de reformateur (8), les ailettes (9) étant intégralement extrudées avec les parois de reformateur (8), les ailettes (9) étant prévues en liaison d'écoulement de gaz jusqu'au brûleur (21) pour guider le gaz de brûleur chaud depuis le brûleur (21) le long des ailettes (9) afin d'absorber la chaleur du gaz de brûleur chaud et de faire passer la chaleur à travers la paroi de reformateur (8) dans le volume de reformateur interne (5), dans lequel la chambre de reformateur (2) comprend une pluralité de nervures (6) intégralement extrudées avec les parois de reformateur (8) et s'étendant depuis un côté interne des parois de reformateur (8) vers une région centrale (7) du volume de reformateur interne (5) pour le transfert de chaleur depuis les nervures (6) jusqu'au combustible évaporé dans le volume de reformateur interne (5) lorsque le combustible évaporé s'écoule à travers le volume de reformateur interne (5),
**caractérisé en ce qu'**une pluralité de plaques de guidage (4a, 4b) sont prévues à l'intérieur du volume de reformateur interne (5), la pluralité de plaques de guidage (4a, 4b) comprenant un premier type de plaques de guidage (4a) et un second type de plaques de guidage (4b), le premier type et le second type de plaques de guidage étant agencés dans une configuration alternée ; dans lequel le premier type de plaques de guidage (4a) comprend une ouverture centrale (13) et des pales d'obstruction (14) agencées entre les nervures (6) pour bloquer l'écoulement de combustible évaporé à travers les espaces (10) entre les nervures (6) et pour forcer l'écoulement de combustible évaporé à travers l'ouverture centrale (13) ; dans lequel le second type de plaques de guidage (4b) comprend une plaque de blocage centrale (17) et des pales à obstruction partielle (18) s'étendant depuis la plaque de blocage (17) partiellement dans les espaces (10) entre les nervures (6) pour bloquer l'écoulement de combustible évaporé à travers la région centrale (7) du volume de reformateur interne (5) et pour forcer l'écoulement de combustible évaporé à travers les espaces (10) entre les nervures (6) ; dans lequel la configuration alternée est configurée pour forcer l'écoulement évaporé dans le volume de reformateur interne (5) depuis la région centrale (7) vers les parois de reformateur (8) et dans les espaces entre les nervures (6) et à nouveau dans la région centrale (7) pour le mélange radial du combustible évaporé et pour un transfert de chaleur amélioré entre les parois de reformateur (8) et le combustible évaporé.

2. Système de pile à combustible selon la revendication 1, dans lequel la chambre de reformateur est une pièce unique extrudée.

3. Système de pile à combustible selon la revendication 1 ou 2, dans lequel une longueur des nervures (6) est plus longue qu'une longueur des ailettes (9) et le nombre des nervures (6) est inférieur au nombre des ailettes (9).

4. Système de pile à combustible selon la revendication 3, dans lequel la longueur des nervures (6) est supérieure à 20 % d'une largeur du volume de reformateur interne (5), la largeur étant calculée entre des parois de reformateur opposées (8).

5. Système de pile à combustible selon une quelconque revendication précédente, dans lequel l'évaporateur de combustible de reformateur comprend un canal d'évaporation de combustible (11) intégralement extrudé avec les parois de reformateur (8), le canal d'évaporation de combustible (11) s'étendant parallèlement à l'axe longitudinal (40) de la chambre de reformateur (2) depuis une extrémité vers l'extrémité opposée de la chambre de reformateur (2), dans lequel le canal d'évaporation de combustible (11) est agencé pour transférer de la chaleur depuis le gaz de brûleur chaud à travers le canal thermique (11) et vers le combustible dans le canal d'évaporation de combustible (11) afin de chauffer et d'évaporer le combustible lorsque le combustible passe à travers le canal d'évaporation de combustible (11).

6. Système de pile à combustible selon la revendication 5, dans lequel le canal d'évaporation de combustible (11) comprend un côté externe et un côté interne opposé, dans lequel le côté externe comprend des ailettes externes (9a) en liaison d'écoulement de fluide avec le brûleur (21) et dans lequel le côté interne comprend des nervures internes (6a) s'étendant dans le canal d'évaporation de combustible (11) pour le transfert de chaleur depuis le gaz de brûleur chaud depuis les ailettes externes (9a) vers les nervures internes (6a) et depuis les nervures internes (6a) vers le combustible s'écoulant dans le canal d'évaporation de combustible (11).

7. Système de pile à combustible selon une quelconque revendication précédente, dans lequel le système de reformateur (1) comprend une cavité (28) au niveau d'une extrémité de la chambre de reformateur (2), la cavité (28) étant en liaison d'écoulement de fluide avec l'évaporateur de combustible de reformateur (11) pour recevoir le combustible évaporé, la cavité (28) étant séparée du volume de reformateur interne (5) par une plaque de diffuseur (24), la plaque de diffuseur (24) étant pourvue d'une pluralité de perforations (26) réparties sur la plaque de diffuseur (24), l'écoulement de fluide des perforations reliant la cavité (28) au volume de reformateur interne (5) afin de répartir le combustible évaporé depuis la cavité (28) de manière uniforme dans le volume de reformateur interne (5) lorsque le combustible évaporé s'écoule depuis la cavité (28) à travers les perforations (26) dans le volume de reformateur interne (5).

8. Système de pile à combustible selon une quelconque revendication précédente, dans lequel le brûleur (21) est agencé de manière coaxiale à la chambre de reformateur (2) et dans le prolongement longitudinal de la chambre de reformateur (2), et dans lequel le brûleur (21) et la chambre de reformateur (2) sont prévus à l'intérieur d'un boîtier (3) unique agencé pour permettre l'écoulement du gaz de brûleur chaud depuis le brûleur (21) vers un côté interne du boîtier (3), le long du côté interne du boîtier (3) jusqu'à une extrémité de la chambre de reformateur (2) et le long du côté externe des parois de reformateur (8) entre les ailettes (9) jusqu'à une extrémité opposée de la chambre de reformateur (2) et hors du boîtier (3).

9. Système de pile à combustible selon la revendication 8, comprenant un évaporateur de combustible de brûleur (22) à l'intérieur du boîtier (3) pour fournir du combustible de brûleur évaporé au brûleur (21) ; dans lequel l'évaporateur de combustible de brûleur (22) est situé entre la chambre de reformateur (2) et le brûleur (21) et en liaison d'écoulement de gaz avec le brûleur (21) pour recevoir le gaz de brûleur chaud depuis le brûleur (21) afin de chauffer le combustible de brûleur dans l'évaporateur de combustible de brûleur (22) ; l'évaporateur de combustible de brûleur (22) étant équipé d'un dispositif de chauffage électrique pour chauffer et évaporer le combustible de brûleur en situation de démarrage.

10. Procédé d'exploitation d'un système de pile à combustible selon une quelconque revendication précédente, dans lequel le procédé comprend
- la fourniture d'un système de reformateur (1) avec une chambre de reformateur extrudée (2) qui présente une section transversale constante le long d'un axe longitudinal (40) avec un volume de reformateur interne (5) entouré par des parois de reformateur (8) ; la fourniture du volume de reformateur interne (5) avec un catalyseur ;
- la fourniture d'un brûleur (21), brûlant le combustible pour créer un gaz de brûleur chaud et fournissant le gaz de brûleur chaud à la chambre de reformateur (2) et, avec le gaz chaud chauffant les parois de reformateur (8), faisant passer la chaleur à travers les parois de reformateur (8) dans le volume de reformateur interne (5) ;
- la réception du combustible liquide depuis un réservoir de combustible, l'évaporation de celui-ci dans un évaporateur de combustible de reformateur (11), son acheminement jusqu'au système de reformateur (1), et la conversion catalytique du combustible évaporé en gaz de synthèse pendant que le combustible sous forme évaporée s'écoule à travers le volume de reformateur interne (5) ;
- la réception du gaz de synthèse depuis la chambre de reformateur (2) par une pile à combustible qui est reliée par écoulement de fluide à la chambre de reformateur (2) et la conversion du gaz de synthèse en électricité,
dans lequel la chambre de reformateur (2) comprend une pluralité d'ailettes (9) sur le côté externe des parois de reformateur (8), les ailettes (9) étant intégralement extrudées avec les parois de reformateur (8), les ailettes (9) étant prévues en liaison d'écoulement de gaz jusqu'au brûleur (21), dans lequel le procédé comprend le guidage du gaz de brûleur chaud depuis le brûleur (21) le long des ailettes (9) et l'absorption de la chaleur du gaz de brûleur chaud par les ailettes et le passage de la chaleur absorbée par les ailettes (9) à travers les parois de reformateur (8) dans le volume de reformateur interne (5), dans lequel la chambre de reformateur (2) comprend une pluralité de nervures (6) intégralement extrudées avec les parois de reformateur (8) et s'étendant depuis un côté interne des parois de reformateur (8) vers une région centrale (7) du volume de reformateur interne (5), et le procédé comprend le transfert de chaleur depuis les nervures (6) jusqu'au combustible évaporé dans le volume de reformateur interne (5) lorsque le combustible évaporé s'écoule à travers le volume de reformateur interne (5), **caractérisé en ce que** le procédé comprend la fourniture d'une pluralité de plaques de guidage (4a, 4b) à l'intérieur du volume de reformateur interne (5), la pluralité de plaques de guidage (4a, 4b) comprenant un premier type de plaques de guidage (4a) et un second type de plaques de guidage (4b), le premier type et le second type de plaques de guidage étant agencés dans une configuration alternée ; dans lequel le premier type de plaques de guidage (4a) vient en butée contre un côté interne des parois de reformateur (8) et comprend une ouverture centrale (13) configurée pour bloquer l'écoulement de combustible évaporé le long des parois de reformateur (8) et pour forcer l'écoulement de combustible évaporé à travers l'ouverture centrale (13) ; dans lequel le second type de plaques de guidage (4b) comprend une plaque de blocage centrale (17) et des pales à obstruction partielle (18) s'étendant depuis la plaque de blocage (17) partiellement dans les espaces (10) entre les nervures (6), prévoyant des régions ouvertes au niveau des parois latérales (8), pour bloquer l'écoulement de combustible évaporé à travers la région centrale (7) du volume de reformateur interne (5) et pour forcer l'écoulement de combustible évaporé vers les parois latérales (8) ; dans lequel le procédé comprend, par la configuration alternée des plaques de guidage (4a, 4b), le fait de forcer le combustible évaporé dans le volume de reformateur interne (5) depuis la région centrale (7) vers les parois de reformateur (8) dans les espaces entre les nervures (6) et à nouveau dans la région centrale (7) pour le mélange radial du combustible évaporé et pour un transfert de chaleur amélioré entre les parois de reformateur (8) et le combustible évaporé.

11. Procédé selon la revendication 10, dans lequel le procédé comprend la fourniture d'une cavité (28) au niveau d'une extrémité de la chambre de reformateur (2), la cavité (28) étant en liaison d'écoulement de fluide avec l'évaporateur de combustible de reformateur (11) et séparée depuis le volume de reformateur interne (5) par une plaque de diffuseur (24), la plaque de diffuseur (24) étant pourvue d'une pluralité de perforations (26) réparties sur la plaque de diffuseur (24) ; le procédé comprenant en outre la fourniture d'un écoulement de combustible évaporé depuis l'évaporateur de combustible de reformateur (11) dans la cavité (28) et la répartition du combustible évaporé depuis la cavité (28) de manière uniforme dans le volume de reformateur interne (5) à travers les perforations (26).
